# EUROPÄISCHE PATENTSCHRIFT

(11) **EP 1 180 323 B1**
(45) Veröffentlichungstag und Bekanntmachung des Hinweises auf die Patenterteilung: **27.07.2005**
(21) Anmeldenummer: 01119272.1
(22) Anmeldetag: 09.08.2001
(51) Int. Cl.: A01K 27/00

(54) **Hundegeschirr und Verbindungselement hierfür**
Harness for dogs and respective connecting element
Harnais pour les chiens et élement de connection pour l'harnais

(30) Priorität: 14.08.2000 DE 20013975 U
(43) Veröffentlichungstag der Anmeldung: 20.02.2002
(73) Patentinhaber: Koch, Ernst, 86899 Landsberg (DE)
(72) Erfinder: Koch, Ernst, 86899 Landsberg (DE)
(74) Vertreter: Grünecker, Kinkeldey, Stockmair & Schwanhäusser Anwaltssozietät

(56) Entgegenhaltungen:
- EP-A- 0 691 076
- US-A- 2 233 397
- US-A- 4 941 434
- US-A- 5 335 627

## Beschreibung

Die Erfindung betrifft ein Hundegeschirr, bestehend aus einer Mehrzahl von Gurtstücken, die miteinander fest und/oder unter Einschluß von Einschlaufelementen und/oder durch zumindest eine Schloß- und/oder Längeneinstelleinrichtung verbunden sind oder eine Längenstelleinrichtung aufweisen, wobei das Hundegeschirr weiterhin ein plattenförmiges Verbindungselement mit einer Mehrzahl von Gurtaufnahmeschlitzen aufweist. Daneben betrifft die Erfindung ein Verbindungselement für Hundegeschirre mit einer Verbindungsplatte und einer Mehrzahl von Gurtaufnahmeschlitzen bzw. Gutführungsschlitzen.

Hundegeschirre, die insbesondere aus Gurtmaterial bestehen und einen vorderen Geschirrabschnitt und einen hinteren Geschirrabschnitt aufweisen, die jeweils durch einen oberen und unteren Längsgurt miteinander verbunden sind, sind in einer Vielzahl von Ausführungsformen bekannt, beispielsweise aus der US 2,233,397 A oder aus der US 5,335,627 A.

Die Anlenkung der Längsgurte an den vorderen und hinteren Geschirrabschnitt, wie auch die Verbindung einzelner Gurtabschnitte untereinander, erfolgt im allgemeinen durch Metallringe oder vergleichbare Verbindungselemente, insoweit die einzelnen Gurtabschnitte oder Geschirrabschnitte nicht fest miteinander vernäht oder fest verbunden sind. Andere bekannte Verbindungselemente führen zu einer starken Verkantung der Gurte, was zu Scheuerstellen führen kann, oder weisen einen komplexen Aufbau auf.

Teilweise bereitet auch die eindeutige Lageorientierung der an den Verbindungselementen angelenkten Gurtabschnitte oder Geschirrabschnitte zueinander Schwierigkeiten, so daß es zu Richtungsverlagerungen der Gurtabschnitte oder Geschirrteile zueinander kommen kann. Bei bekannten, sehr großen Verbindungselementen, die eine Vielzahl von Gurten miteinander verbinden, liegen die Herstellungskosten deutlich höher und die Handhabbarkeit des Geschirrs wird erschwert.

Der Erfindung liegt daher die Aufgabe zugrunde, ein Hundegeschirr sowie ein Verbindungselement der vorgenannten Art derart zu verbessem, daß die Lageorientierung der einzelnen Gurtabschnitte oder Geschirrteile des Hundegeschirrs im Bereich der Verbindungselemente verbessert wird und die Verbindungselemente sowie das Hundegeschirr kostengünstig herstellbar und gut handhabbar ist.

Für ein Hundegeschirr der eingangs genannten Art wird diese Aufgabe erfindungsgemäß dadurch gelöst, daß das plattenförmige Verbindungselement genau drei, jeweils geschlossene Gurtaufnahmeschlitze aufweist.

Hierdurch ist es möglich, eine eindeutige Lageorientierung der einzelnen, an dem Verbindungselement angreifenden Gurtabschnitte oder Geschirrteile, z.B. zwischen dem oberen und unteren Längsgurt und dem zugehörigen vorderen oder hinteren Geschirrabschnitt, herbeizuführen, ohne daß die Gurte verkantet werden.

Für ein Verbindungselement der eingangs genannten Art wird die vorgenannte Aufgabe erfindungsgemäß dadurch gelöst, daß die Verbindungsplatte genau drei, jeweils geschlossene Gurtaufnahmeschlitze aufweist.

Die Gurtführungsschlitze sind vorzugsweise in rechtwinkliger oder zueinander im ca. 60° Winkel geneigter Anordnung, so daß im letzteren Fall die Gurtführungsschlitze etwa die Seiten eines gleichseitigen Dreieckes bilden.

Vorzugsweise besteht die Verbindungsplatte aus Kunststoff oder Metall und kann auch farbig oder mit Firmenkennzeichnungen versehen sein.

Nach einem bevorzugten Ausführungsbeispiel der Erfindung weist das Hundegeschirr Verbindungsplatten zur Verbindung des oberen und unteren Längsgurtes mit dem vorderen Geschirrabschnitt auf, sowie zur Verbindung des unteren Längsgurtes mit dem hinteren Geschirrabschnitt.

Vorzugsweise sind kreisförmige oder mit zumindest teilweise bogenförmig umfangsbegrenzter Kontur versehene Verbindungsplatten mit drei um ca. 60° zueinander geneigt angeordneten Gutführungsschlitzen versehen, die zur Verbindung von oberem und unterem Längsgurt mit dem vorderen Geschirrabschnitt eingesetzt sind, während der untere Längsgurt mit dem hinteren Geschirrabschnitt unten durch eine Verbindungsplatte als Verbindungselement verbunden ist, wobei diese Verbindungsplatte vorzugsweise rechteckig oder quadratisch ausgebildet und mit Gurtführungsschlitzen versehen ist, die zueinander im wesentlichen rechtwinklig ausgebildet sind.

Weitere bevorzugte Ausgestaltungen sind in den jeweiligen Unteransprüchen dargelegt.

Die Erfindung wird nachstehend anhand von Ausführungsbeispielen und zugehörigen Zeichnungen näher erläutert. In diesen zeigen:
- Fig. 1: ein Hundegeschirr nach einem ersten Ausführungsbeispiel der Erfindung,
- Fig. 2: eine Verbindungsplatte nach einem ersten Ausführungsbeispiel der Erfindung, und
- Fig. 3: eine Verbindungsplatte nach einem zweiten Ausführungsbeispiel der Erfindung.

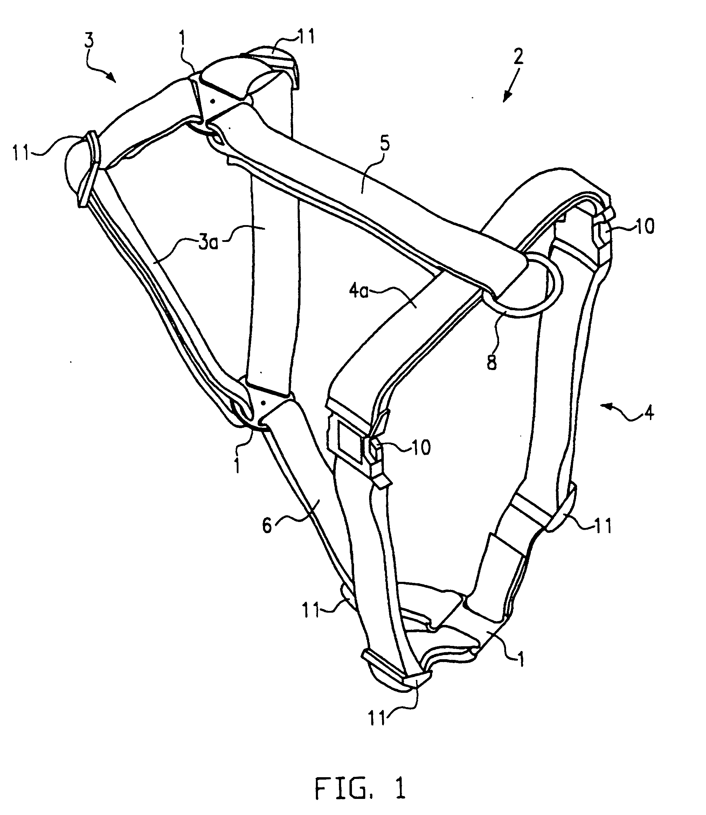

Nachfolgend wird anhand von Figur 1 ein Ausführungsbeispiel eines Hundegeschirrs erläutert, wobei dieses auch in anderer Kombination mit als Verbindungsplatte 1 ausgebildeten Verbindungselementen sein kann.

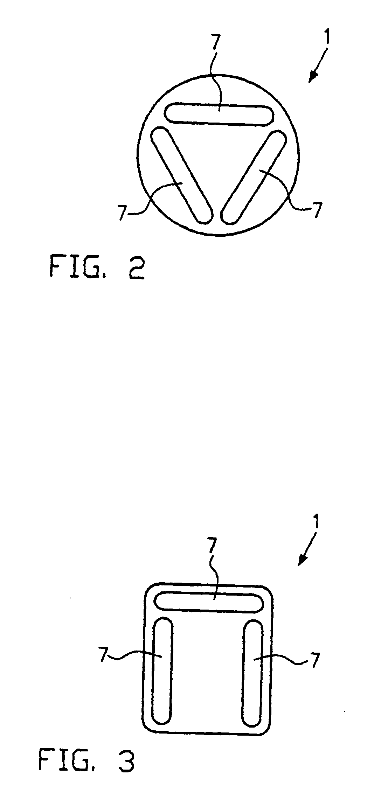

Zwei Ausführungsbeispiele derartiger Verbindungsplatten 1 selbst sind in den Figuren 2 und 3 gezeigt.

Ein Hundegeschirr 2 weist einen in Umfangsrichtung geschlossenen vorderen Geschirrabschnitt 3 und einen in Umfangsrichtung geschlossenen oder jedenfalls schließbaren hinteren Geschirrabschnitt 4 auf, wobei vorderer und hinterer Geschirrabschnitt 3, 4 durch einen oberen und einen unteren Längsgurt 5, 6 miteinander verbunden sind. Die gelenkige Verbindung von oberem und unterem Längsgurt 5, 6 mit vorderen bzw. hinteren Geschirrabschnitt 3, 4 erfolgt, jedenfalls teilweise, über Verbindungsplatten 1, die vorzugsweise im Bereich des vorderen Geschirrabschnittes 3 als kreisförmige Verbindungsplatte 1 ausgebildet sind (vgl. Fig. 2) mit Gurtführungsschlitzen 7, die jeweils praktisch entlang eines gleichseitigen Dreieckes und damit ca. im 60° Winkel zueinander geneigt angeordnet sind, und eine einwandfreie Zuordnung sowohl der einzelnen Gurtabschnitte 3a, aus denen der vordere Geschirrabschnitt 3 gebildet ist, erlauben und zugleich eine hohe Festigkeit mit Tragekomfort für das Tier verbinden und zu einer eindeutigen Richtungszuordnung sowohl bei oberem und unterem Längsgurt wie auch innerhalb des vorderen Geschirrabschnittes 3 führen.

Am hinteren Geschirrabschnitt 4 ist der obere Längsgurt 5 fest vemäht (d.h. der entsprechende obere Gurtabschnitt 4a des hinteren Geschirrabschnittes 4 ist durch eine an der Unterseite des oberen Längsgurtes 5 vernähte Schlaufe desselben hindurchgeführt, wobei in dieser zugleich ein Befestigungsring 8 zum Anbringen einer Führungsleine eingeschlauft ist).

Im unteren Bereich, d.h. zur Anlenkung des unteren Längsgurtes 6 am hinteren Geschirrabschnitt 4 ist eine rechteckförmige Verbindungsplatte 1 (s. Fig. 3) vorgesehen, deren Gurtführungsschlitze 7 im wesentlichen rechtwinklig zueinander verlaufen und damit der physiologisch bedingten Gurtrichtung von unterem Längsgurt und zugehörigen Gurtabschnitten des hinteren Geschirrabschnittes 4 Rechnung tragen.

Selbstverständlich ist es auch möglich, zur Verbindung von oberem und unterem Längsgurt 5, 6 am vorderen Geschirrabschnitt 3 jeweils in herkömmlicher Weise Metallringelemente zu verwenden und nur im hinteren, unteren Bereich des Hundegeschirres 2, d.h. zur Anbindung des unteren Längsgurtes 6 am hinteren Geschirrabschnitt 4 eine Verbindungsplatte gemäß Figur 3 zu verwenden.

Es kann ferner lediglich eine (einzige) Verbindungsplatte 1 zur Anlenkung des oberen Längsgurtes 5 am vorderen Geschirrabschnitt 3 vorgesehen sein, während im übrigen entweder ein Metallringelement als Verbindungselement verwendbar ist (zur Verbindung des unteren Längsgurtes 6 am vorderen Geschirrabschnitt 3) oder der hintere Geschirrabschnitt 4 sowohl im Bereich des oberen als auch des unteren Längsgurtes 5, 6 durchgeschlauft ist.

Ferner weist der Gurt Schließeinrichtungen 10 und Verstelleinrichtungen 11 auf, wobei vorzugsweise der hintere Geschirrabschnitt 4 zwei Schnell-Verschlußschlösser (Klick-Verschluß) 10 sowie eine Verstelleinrichtung (Verstellschnalle) 11 und der vordere Geschirrabschnitt 3, der benachbart zum Kopf des Tieres sich befindet, Verstellschnallen 11 aufweist.

In alternativer Weise kann eine Verbindungsplatte 1 gemäß Figur 2 bzw. Figur 3 am Hundegeschirr 2, z.B. vom unten/hinten unten oder nur vom unten oder vom oben/ hinten, unten vorgesehen sein.

Die Verbindungsplatte 1 kann auch dreieckig oder rhombisch ausgeführt sein und ist unter Beachtung festigkeitstechnischer Gesichtspunkte mit drei Gurtführungsschlitzen versehen.

Durch die Erfindung wird in vorteilhafter Weise eine hinsichtlich Lage und Richtungsorientierung von Geschirrabschnitten und Gurtabschnitten verbesserte Ausbildung von Hundegeschirren erreicht und zwar durch Einführung von Verbindungsplatten als Verbindungselementen zwischen den einzelnen Geschirrabschnitten bzw. Gurtabschnitten, insbesondere zur Anbindung von oberem und/oder unterem Längsgurten bei dem vorderen und/oder hinteren Geschirrabschnitten.

Die Verbindungsplatten 1 können auch verschieden farbig ausgelegt sein bzw. selbst einen Herkunftskennzeichenhinweis für solche Hundegeschirre bilden oder solche Hinweise, auch auf das Tier und/oder seinen Besitzer/Eigentümer, tragen.

Es wird ferner darauf hingewiesen, daß die Gurtabschnitte bzw. das Hundegeschirr selbst nicht nur aus, ggf. verschlauftem, Gurtmaterial bestehen kann (z.B. Nylongurt) - auch doppelt -, sondern auch zumindest abschnittsweise aus einem vorzugsweise synthetischen Schlauchmaterial, das eine polsternde oder elastische Einlage enthält und das den Tragekomfort sowie das Führungsverhalten derartiger Geschirre deutlich verbessert, bestehen kann.

Gegebenenfalls kann auch im Bereich der Verbindungsplatten das Schlauchmaterial einlagelos zu einem "Gurtschlauch" querschnittsverringert und nur zwischen den Verbindungsplatten mit voller "Schlauchelastizität", d.h. unter Verwendung einer elastischen oder polsternden Einlage ausgebildet sein.

## Patentansprüche

1. Hundegeschirr, bestehend aus einer Mehrzahl von Gurtstücken, die miteinander fest und/oder unter Einschluß von Einschlaufelementen und/oder durch zumindest eine Schloß- und/oder Längeneinstelleinrichtung verbunden sind oder eine Längenstelleinrichtung aufweisen, wobei das Hundegeschirr weiterhin ein plattenförmiges Verbindungselement (1) mit einer Mehrzahl von Gurtaufnahmeschlitzen (7) aufweist, **dadurch gekennzeichnet, daß** das plattenförmige Verbindungselement (1) genau drei, jeweils geschlossene Gurtaufnahmeschlitze (7) aufweist.

2. Hundegeschirr nach Anspruch 1, **dadurch gekennzeichnet, daß** das Verbindungselement (1) kreisförmig ist, und die Geschirraufnahmeschlitze (7) zueinander, vorzugsweise unter ca. 60°, geneigt sind.

3. Hundegeschirr nach Anspruch 1, **dadurch gekennzeichnet, daß** das Verbindungselement(1) rechteckförmig oder quadratisch ist, und die Gurtaufnahmeschlitze (7) zueinander, vorzugsweise unter einem Winkel von ca. 90°, angeordnet sind.

4. Hundegeschirr nach zumindest einem der vorhergehenden Ansprüche 1 bis 3, **dadurch gekennzeichnet, daß** zumindest zwei plattenförmige Verbindungselemente (1) vorgesehen sind.

5. Hundegeschirr nach Anspruch 4, **dadurch gekennzeichnet, daß** das Verbindungselement kreisförmig ausgebildete zur Verbindung eines Geschirrvorderabschnittes (3) mit einem oberen und/oder unteren Längsgurt (5,6) vorgesehen ist.

6. Hundegeschirr nach zumindest einem der vorhergehenden Ansprüche 1 bis 5, **dadurch gekennzeichnet, daß** das rechteckige oder quadratische Verbindungselement (1) zur Verbindung eines Geschirrhinterabschnittes (4) mit einem unteren Längsgurt (6) vorgesehen ist.

7. Hundegeschirr nach zumindest einem der vorhergehenden Ansprüche 1 bis 6, **dadurch gekennzeichnet, daß** im Bereich einer Verschlaufung eines oberen Längsgurtes (5) mit dem Geschirrhinterabschnitt (4) eine Metallöse (8) zum Einhängen einer Führungsleine oder dergleichen angeordnet ist.

8. Hundegeschirr nach zumindest einem der vorhergehenden Ansprüche 1 bis 7, **dadurch gekennzeichnet, daß** im Geschirrhinterabschnitt (4) zumindest ein Schloßelement (10), insbesondere ein Klick- Schnellverschluß, angeordnet ist.

9. Hundegeschirr nach zumindest einem der vorhergehenden Ansprüche 1 bis 8, **dadurch gekennzeichnet, daß** die Geschirrabschnitte (3,4,5,6) zumindest teilweise aus einem Schlauchmaterial mit einer polsternden oder elastischen Einlage bestehen.

10. Verbindungselement für Hundegeschirre mit einer Verbindungsplatte (1) und einer Mehrzahl von Gurtaufnahmeschlitzen (7), **dadurch gekennzeichnet, daß** die Verbindungsplatte (1) genau drei, jeweils geschlossene Gurtaufnahmeschlitze (7) aufweist.

11. Verbindungselement nach Anspruch 10, **dadurch gekennzeichnet, daß** die Verbindungsplatte (1) kreisförmig oder mit einer Bogenabschnitte aufweisenden Außenkontur versehen ist, und die drei Gurtaufnahmeschlitze (7) um ca. 60° zueinander geneigt sind.

12. Verbindungselement nach Anspruch 10, **dadurch gekennzeichnet, daß** die Verbindungsplatte (1) prismatisch, insbesondere rechteckig oder quadratisch ist, und insbesondere zumindest zwei der drei Gurtaufnahmeschlitze (7) zueinander in einem Winkel von ca. 90° angeordnet sind.

13. Verbindungselement nach zumindest einem der vorhergehenden Ansprüche 10 bis 12, **dadurch gekennzeichnet, daß** die Verbindungsplatte (7) aus Kunststoff oder Metall besteht.

## Claims

1. Dog harness consisting of a plurality of belt pieces which are connected to one another fixedly and/or with the inclusion of looped-in elements and/or by at least one buckle arrangement and/or length-adjusting arrangement, or have a length-adjusting arrangement, wherein said dog harness also has a plate-shaped connecting element (1) with a plurality of belt-receiving slits (7),
**characterised in that** the plate-shaped connecting element (1) has exactly three belt-receiving slits (7) which are closed, respectively.

2. Dog harness according to claim 1,
**characterised in that** the connecting element (1) is circular, and the belt-receiving slits (7) are inclined in relation to one another, preferably at about 60°.

3. Dog harness according to claim 1,
**characterised in that** the connecting element (1) is rectangular or square, and the belt-receiving slits (7) are preferably disposed at an angle of about 90° in relation to one another.

4. Dog harness according to at least one of the preceding claims 1 to 3,
**characterised in that** at least two plate-shaped connecting elements (1) are provided.

5. Dog harness according to claim 4,
**characterised in that** the connecting element of circular construction is intended for connecting a front section (3) of the harness to an upper and/or a lower longitudinal belt (5, 6).

6. Dog harness according to at least one of the preceding claims 1 to 5,
**characterised in that** the rectangular or square connecting element (1) is provided for connecting a rear section (4) of the harness to a lower longitudinal belt (6).

7. Dog harness according to at least one of the preceding claims 1 to 6,
**characterised in that** a metal eye (8) for attaching a guiding lead or the like is disposed in the region in which an upper longitudinal belt (5) is looped together with the rear section (4) of the harness.

8. Dog harness according to at least one of the preceding claims 1 to 7,
**characterised in that** at least one buckle element (10), in particular a click-type quick-action fastener, is disposed in the rear section (4) of the harness.

9. Dog harness according to at least one of the preceding claims 1 to 8,
**characterised in that** the sections (3, 4, 5, 6) of the harness consist, at least partially, of a hose-type material with a cushioning or elastic lining.

10. Connecting element for dog harnesses, with a connecting plate (1) and a plurality of belt-receiving slits (7),
**characterised in that** the connecting plate (1) has exactly three belt-receiving slits (7) which are closed, respectively.

11. Connecting element according to claim 10,
**characterised in that** the connecting plate (1) is circular or is provided with an outer contour having curved sections, and the three belt-receiving slits (7) are inclined by about 60° in relation to one another.

12. Connecting element according to claim 10,
**characterised in that** the connecting plate (1) is prismatic, and in particular rectangular or square, and in particular at least two of the three belt-receiving slits (7) are disposed at angle of about 90° in relation to one another.

13. Connecting element according to at least one of the preceding claims 10 to 12,
**characterised in that** the connecting plate (7) consists of plastic or metal.

## Revendications

1. Harnais pour chien, constitué d'une pluralité de morceaux de sangle, qui sont reliés les uns aux autres fixement et/ou à l'aide d'éléments formant boucles et/ou par au moins un système de fermeture et/ou de réglage de la longueur ou qui comprennent un système de réglage de la longueur, le harnais pour chien comprenant en outre un élément de connexion (1) en forme de plaque avec une pluralité de fentes de réception de sangle (7), **caractérisé en ce que** l'élément de connexion (1) en forme de plaque comprend exactement trois fentes de réception de sangle (7) fermées.

2. Harnais pour chien selon la revendication 1, **caractérisé en ce que** l'élément de connexion (1) est circulaire, et les fentes de réception de sangle (7) sont inclinées les unes par rapport aux autres, de préférence d'approximativement 60°.

3. Harnais pour chien selon la revendication 1, **caractérisé en ce que** l'élément de connexion (1) est rectangulaire ou carré, et les fentes de réception de sangle (7) sont disposées les unes par rapport aux autres de préférence selon un angle d'approximativement 90°.

4. Harnais pour chien selon l'une au moins des revendications 1 à 3, **caractérisé en ce qu'**au moins deux éléments de connexion (1) en forme de plaque sont prévus.

5. Harnais pour chien selon la revendication 4, **caractérisé en ce que** l'élément de connexion (1) forme circulaire est prévu pour connecter une section avant de harnais (3) à une sangle longitudinale supérieure et/ou inférieure (5, 6).

6. Harnais pour chien selon l'une au moins des revendications 1 à 5, **caractérisé en ce que** l'élément de connexion (1) rectangulaire ou carré est prévu pour connecter une section arrière de harnais (4) à une sangle longitudinale inférieure (6).

7. Harnais pour chien selon l'une au moins des revendications 1 à 6, **caractérisé en ce qu'**un oeillet métallique (8) destiné à accrocher une laisse ou un élément similaire est disposé dans la zone d'une liaison par boucle entre une sangle longitudinale supérieure (5) et la section arrière de harnais (4).

8. Harnais pour chien selon l'une au moins des revendications 1 à 7, **caractérisé en ce qu'**au moins un élément de fermeture (10), notamment une fermeture rapide à déclic, est disposé dans la section arrière de harnais (4).

9. Harnais pour chien selon l'une au moins des revendications 1 à 8, **caractérisé en ce que** les sections de harnais (3, 4, 5, 6) sont constituées au moins en partie d'un matériau de tuyau flexible à garniture de rembourrage ou élastique.

10. Elément de connexion pour harnais pour chien comprenant une plaque de connexion (1) et une pluralité de fentes de réception de sangle (7), **caractérisé en ce que** la plaque de connexion (1) comprend exactement trois fentes de réceptions de sangle (7) fermées.

11. Elément de connexion selon la revendication 10, **caractérisé en ce que** la plaque de connexion (1) est circulaire ou pourvue d'un contour extérieur comprenant des sections courbées, et les trois fentes de réception de sangle (7) sont inclinées les unes par rapport aux autres suivant un angle d'approximativement 60°.

12. Elément de connexion selon la revendication 10, **caractérisé en ce que** la plaque de connexion (1) est prismatique, notamment rectangulaire ou carrée, et en particulier, au moins deux des trois fentes de réception de sangle (7) sont disposées les unes par rapport aux autres selon un angle d'approximativement 90°.

13. Elément de connexion selon l'une au moins des revendications 10 à 12, **caractérisé en ce que** la plaque de connexion (1) est constituée de matière plastique ou de métal.
